# EUROPEAN PATENT APPLICATION

(11) **EP 4 050 689 A1**
(43) Date of publication of application: **31.08.2022**
(21) Application number: 20890373.2
(22) Date of filing: 19.11.2020
(51) Int. Cl.: H01M 10/04

(54) **BATTERY, BATTERY MODULE, BATTERY PACK, AND ELECTRIC VEHICLE**

(30) Priority: 22.11.2019 CN 201911162027
(71) Applicant: BYD Company Limited, Shenzhen, Guangdong 518118 (CN)
(72) Inventor: SUN, Huajun, Shenzhen, Guangdong 518118 (CN); LU, Zhipei, Shenzhen, Guangdong 518118 (CN); ZHU, Yan, Shenzhen, Guangdong 518118 (CN); HU, Shichao, Shenzhen, Guangdong 518118 (CN)
(74) Representative: Hoffmann Eitle
(86) International application number: PCT/CN2020/130025
(87) International publication number: WO 2021/098761

(57) **Abstract**

The present disclosure provides a battery, including: a housing (10); a plurality of accommodating cavities (60) arranged in the housing; a partition plate (20) for separating two adjacent accommodating cavities (60); an electrode core assembly (30), received in one of the accommodating cavities (60), the electrode core assembly (30) including at least one electrode core, and a plurality of electrode core assemblies (30) being sequentially arranged in a first direction and connected in series; a plurality of sampling wires, electrically connected to the plurality of electrode core assemblies (30) correspondingly; and a wire harness channel, receiving the plurality of sampling wires. A battery module, a battery pack, and an electric vehicle are further provided.

## Description

### CROSS-REFERENCE TO RELATED APPLICATIONS

The present disclosure claims priority to Chinese Patent Application No. "201911162027.X", entitled "BATTERY, BATTERY MODULE, BATTERY PACK, BATTERY PACK, AND ELECTRIC VEHICLE" and filed by BYD Co., Ltd. on November 22, 2019.

### FIELD

The present disclosure relates to the field of batteries, and specifically, to a battery, a battery module, a battery pack, and an electric vehicle.

### BACKGROUND

With the continuous popularization of new energy vehicles, the usage requirements for power batteries in the new energy vehicles are increasingly high. Especially, as the requirements of users for mile range of the new energy vehicles continuously increase, the overall capacity of batteries of the new energy vehicles needs to be continuously increased. Generally, when a high voltage (high capacity) is required, a large number of electrode cores are connected in series to form an electrode core assembly, and then multiple electrode core assemblies are assembled into a power battery. However, power connection between two adjacent electrode cores needs to be achieved through an external power connector, which may result in more overall installation structures of the power battery, which increases the costs, and the overall weight. Moreover, the installation structures occupy a larger part of an internal space of the power battery, which reduces the overall space utilization of the power battery. More electrode cores arranged side by side indicate a more wasted space. In addition, when the multiple electrode core assemblies are used for forming the power battery, information of the electrode core assemblies in aspects of current, voltage, and temperature generally needs to be obtained in time, to better manage the power battery. However, the electrode core assemblies are inside the power battery, and after a housing of the power battery is sealed, signals such as the voltage, current, temperature of the electrode core assemblies inside the power battery cannot be acquired in real time. Therefore, how to acquire the signals of the multiple electrode core assemblies inside the battery is also a difficult problem that needs to be resolved in manufacture of the power battery.

### SUMMARY

This application provides a battery, including: a housing; multiple accommodating cavities arranged in the housing; a partition plate for separating two adjacent accommodating cavities; an electrode core assembly, received in one of the accommodating cavities, the electrode core assembly including at least one electrode core, and multiple electrode core assemblies being sequentially arranged in a first direction and connected in series; multiple sampling wires, electrically connected to the multiple electrode core assemblies correspondingly; and a wire harness channel, receiving the multiple sampling wires.

This application further provides a battery module, including the foregoing battery.

This application further provides a battery pack, including the foregoing battery or the foregoing battery module.

This application further provides an electric vehicle, including the foregoing battery module or the foregoing battery pack.

In embodiments of this application, the multiple electrode core assemblies are connected in series in the housing of the battery, which can increase capacity of the battery, improve connection stability between the electrode core assemblies, and reduce a manufacturing process and costs. In addition, all sampling wires are fixed through the wire harness channel in order in this application, thereby improving sampling accuracy of the entire battery and safety of sampling wire harnesses.

### BRIEF DESCRIPTION OF THE DRAWINGS

To describe the technical solutions in the embodiments of this application more clearly, the following briefly introduces the accompanying drawings required in the embodiments. Apparently, the accompanying drawings in the following description show only some embodiments of this application, and a person of ordinary skill in the art may still derive other accompanying drawings from these accompanying drawings without creative efforts.
FIG. 1 is a schematic three-dimensional structural diagram of a battery according to an embodiment of this application;
FIG. 2 is an exploded view of a battery according to an embodiment of this application;
FIG. 3 is a front view of a battery according to an embodiment of this application;
FIG. 4 is a cross-sectional view of FIG. 3 in an A-A direction;
FIG. 5 is a schematic three-dimensional structural diagram of a battery according to another embodiment of this application;
FIG. 6 is a cross-sectional view of FIG. 5 whose cross-sectional direction is the same as that of FIG. 4;
FIG. 7 is an exploded view of a battery according to another embodiment of this application;
FIG. 8 is a cross-sectional view of FIG. 7 whose cross-sectional direction is the same as that of FIG. 4;
FIG. 9 is an exploded view of a battery according to another embodiment of this application;
FIG. 10 is an exploded view of a battery according to another embodiment of this application;
FIG. 11 is a schematic structural diagram of arranging an electrolyte solution filling channel on a partition plate of a battery according to an embodiment of this application;
FIG. 12 is a schematic structural diagram of arranging an electrolyte solution filling channel on a partition plate of a battery according to another embodiment of this application;
FIG. 13 is a schematic structural diagram of arranging an electrolyte solution guide hole on a partition plate of a battery according to an embodiment of this application;
FIG. 14 is a partially enlarged view of a position B in FIG. 4;
FIG. 15 is a schematic structural diagram of a partition plate, an electrode core connector, a sampling wire, and the like of a battery according to an embodiment of this application;
FIG. 16 is a schematic structural diagram of a partition plate, an electrode core connector, a sampling wire, and the like of a battery according to another embodiment of this application;
FIG. 17 is a schematic structural diagram of a sampling wire, a connector, and a circuit board of a battery according to an embodiment of this application;
FIG. 18 is a schematic structural diagram of a sampling wire, a connector, and a circuit board of a battery according to another embodiment of this application;
FIG. 19 is a schematic diagram of a cross-sectional structure of a sampling channel of a battery according to an embodiment of this application;
FIG. 20 is a schematic three-dimensional structural diagram of the sampling channel of the battery in FIG. 19;
FIG. 21 is a schematic diagram of a cross-sectional structure of a sampling channel of a battery according to another embodiment of this application;
FIG. 22 is a schematic three-dimensional structural diagram of the sampling channel of the battery in FIG. 21;
FIG. 23 is a schematic structural diagram of a battery pack according to an embodiment of this application;
FIG. 24 is a schematic structural diagram of a battery module according to an embodiment of this application;
FIG. 25 is a schematic structural diagram of a battery pack according to an embodiment of this application, the battery pack including a battery module;
FIG. 26 is a schematic structural diagram of an electric vehicle according to an embodiment of this application; and
FIG. 27 is a schematic structural diagram of an electric vehicle according to another embodiment of this application.

### DETAILED DESCRIPTION

To make a person skilled in the art better understand solutions of this application, the following clearly and completely describes the technical solutions in the embodiments of this application with reference to the accompanying drawings in the embodiments of this application. Apparently, the described embodiments are merely a part rather than all of the embodiments of this application. All other embodiments obtained by a person of ordinary skill in the art based on the embodiments of this application without creative efforts shall fall within the protection scope of this application.

In the specification, claims, and accompanying drawings of this application, the terms "first", "second", or the like are intended to distinguish between different objects but do not indicate a particular order. In addition, the terms "include", "have", and any variant thereof are intended to cover a non-exclusive inclusion. For example, a process, method, system, product, or device that includes a series of steps or units is not limited to the listed steps or units; and instead, further optionally includes a step or unit that is not listed, or further optionally includes another step or unit that is intrinsic to the process, method, product, or device.

In the description of this application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "axial direction", "radial direction", and "circumferential direction" are based on orientation or position relationships shown in the accompanying drawings, and are used only for ease and brevity of illustration and description for this application, rather than indicating or implying that the mentioned apparatus or component must have a particular orientation or must be constructed and operated in a particular orientation. Therefore, such terms should not be construed as limiting of this application.

The following describes technical solutions in embodiments of this application with reference to accompanying drawings.

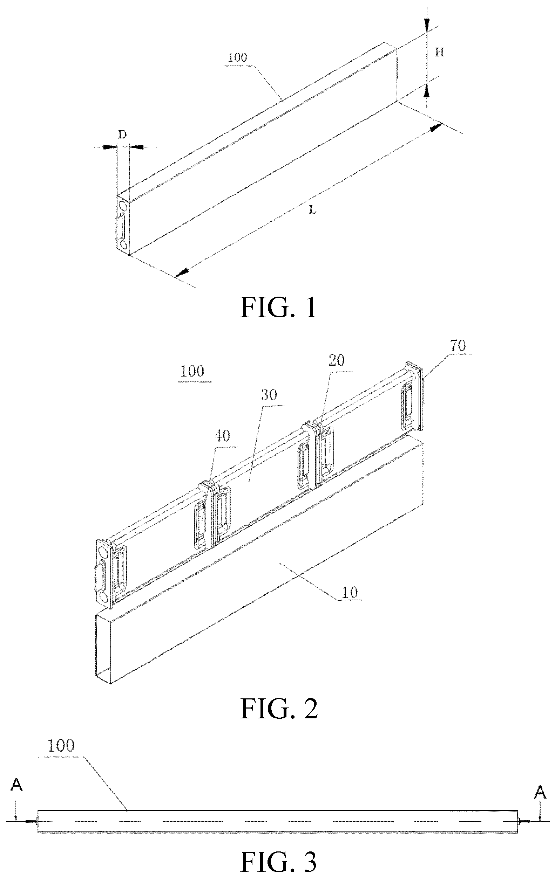

Referring to FIG. 1 to FIG. 4, and FIG. 14, a first embodiment of this application provides a battery 100, and the battery 100 includes a housing 10, a partition plate 20, an electrode core assembly 30, a sampling wire 50, and a wire harness channel 54. Multiple accommodating cavities 60 are formed in the housing 10, and two adjacent accommodating cavities 60 are separated by the partition plate 20. The electrode core assembly 30 is received in one of the accommodating cavities 60, and the electrode core assembly 30 includes at least one electrode core. Multiple electrode core assemblies 30 are sequentially arranged in a first direction. Multiple sampling wires 50 are electrically connected to the multiple electrode core assemblies 30 correspondingly, and the sampling wires 50 are received in the wire harness channel 54.

According to the battery 100 provided by this application, the multiple electrode core assemblies 30 are connected in series in the housing 10 of the battery 100, which can increase capacity of the battery 100, improve connection stability between the electrode core assemblies 30, and reduce a manufacturing process and costs. All sampling wires are fixed through the wire harness channel in order in this application, thereby improving sampling accuracy of the entire battery and safety of sampling wire harnesses.

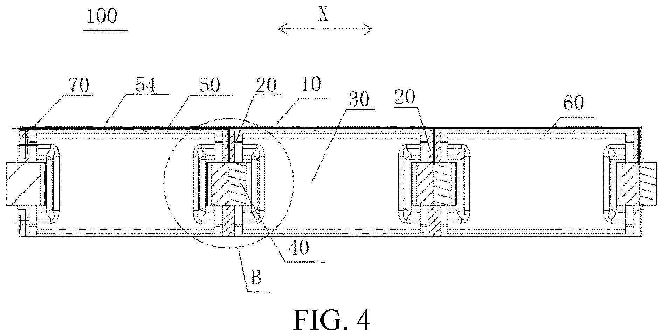

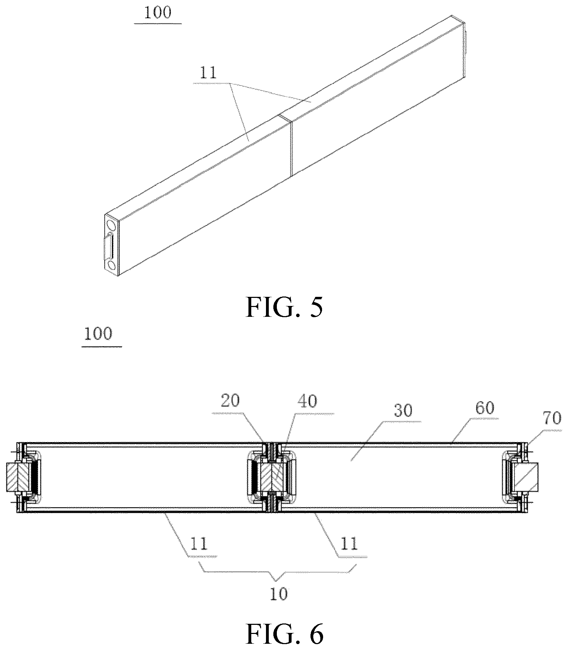

The first direction may be a long direction of the battery 100, for example, the first direction is an X direction shown in FIG. 4. FIG. 6, FIG. 8, FIG. 19, FIG. 21, and the like are also similar to FIG. 4, that is, a direction of a landscape paper is the first direction, which is not further described and labeled below.

In this application, the involved electrode core is an electrode core commonly used in the field of power batteries 100, and the electrode core and the electrode core assembly 30 are components inside the housing 10 of the battery 100, which are not to be understood as the battery 100 itself. The electrode core may be an electrode core formed by winding, or an electrode core made in a laminated manner. Generally, the electrode core at least includes an anode plate, a separator, a cathode plate, and an electrolyte solution. The electrode core is generally a component that is not completely sealed. In this application, an electrode core assembly 30 may be formed by a single electrode core, or may include at least two electrode cores. The at least two electrode cores are connected in parallel to form the electrode core assembly 30. For example, after two electrode cores are connected in parallel, the electrode core assembly 30 is formed; or after four electrode cores are connected in parallel, the electrode core assembly 30 is formed. Therefore, the battery 100 involved in this application cannot be simply understood as a battery module or a battery pack because the battery includes multiple electrode cores.

Generally, the number of electrode core assemblies 30 connected in series in the battery 100 may be determined according to an output voltage of each electrode core assembly 30, a width of a battery pack, and an overall voltage requirement for the battery pack. For example, a voltage systematically outputted by a battery 100 required by a vehicle is 300 V, and a voltage of a conventional iron-lithium battery 100 is 3.2 V. In the related art, the requirement can be met in a case that 100 batteries 100 are connected in series in a battery pack. However, in this application, assuming that two electrode core assemblies 30 are connected in series inside one battery 100, only 50 batteries 100 need to be arranged. By analogy, if ten electrode core assemblies 30 are connected in series, only ten batteries 100 need to be connected in series. That is, by using the battery 100 in this application, the number of batteries 100 in the entire battery pack can be reduced, thereby effectively utilizing a space of the battery pack, and improving space utilization of the battery pack.

The series connection between the electrode core assemblies 30 may be that the multiple electrode core assemblies 30 are sequentially connected in series, or the electrode core assemblies 30 are connected in series at intervals. For example, when there are four electrode core assemblies 30, the first electrode core assembly 30 and the third electrode core assembly 30 may be connected in series to form a first series of electrode core assemblies 30, the second electrode core assembly 30 and the fourth electrode core assembly 30 may be connected in series to form a second series of electrode core assemblies 30, and then the first series of electrode core assemblies 30 and the second series of electrode core assemblies 30 are connected in series.

When the multiple electrode core assemblies 30 are connected in series, there is an internal short circuit problem in a case that electrolyte solutions in different electrode core assemblies 30 are in communication. In addition, there is a higher potential difference between different electrode core assemblies 30 (by using a lithium iron phosphate battery 100 as an example, a potential difference is approximately 4.0 to 7.6 V), and electrolyte solutions arranged in these electrode core assemblies may be decomposed due to the higher potential difference, which affects performance of the battery 100. In this application, the partition plate 20 is arranged between adjacent electrode core assemblies 30. Preferably, to better achieve insulation and separation, the partition plate 20 itself may be selected to be made of an insulating material, that is, the partition plate 20 is an insulating partition plate 20. In this way, without other operations, the two adjacent electrode core assemblies 30 may be directly separated by the partition plate 20 and insulation between the two may be maintained.

In this application, the partition plates 20 separate an accommodating space into several accommodating cavities 60, and each of the accommodating cavities 60 accommodates the electrode core assembly 30, that is, two adjacent accommodating cavities 60 share one partition plate 20.

In this application, each accommodating cavity 60 may accommodate one electrode core assembly 30, or may accommodate multiple electrode core assemblies 30, for example, two or three. In some preferred implementations, each accommodating cavity 60 accommodates one electrode core assembly 30.

In this application, the battery 100 further includes end covers 70 formed at two ends of the battery 100 in the first direction. The housing 10 may be an integral structure extending in the first direction, or may include multiple sub-housings 11 arranged in the first direction.

For example, in an embodiment of this application, as shown in FIG. 2 and FIG. 4, the housing 10 is an integral structure extending in the first direction, and the end covers 70 are arranged at two ends of the housing 10 in the first direction, to enclose an internal space of the housing 10. Multiple partition plates 20 are arranged in the housing 10 at intervals, and side circumferences of the partition plates 20 cooperate with side walls of the housing 10, to separate an interior of the housing 10 into the multiple accommodating cavities 60. The accommodating cavity 60 at an end portion of the battery 100 in the first direction is an end portion accommodating cavity, the accommodating cavity 60 in a middle position of the battery 100 is a middle accommodating cavity, cavity walls of the end portion accommodating cavity include the end cover 70, the partition plate 20, and part of the housing 10 arranged between the end cover 70 and the partition plate 20, and cavity walls of the middle accommodating cavity include two adjacent partition plates 20 and part of the housing 10 arranged between the two adjacent partition plates 20. The end cover 70 at one end of the housing 10 and the housing 10 may be integrally formed, and the end cover 70 at the other end of the housing 10 and the housing 10 may be sealedly connected in a direct or indirect connection manner. For example, the end cover 70 and the housing 10 are sealedly connected by welding or adhesion, or the end cover 70 may be fixedly and sealedly connected to the housing 10 by a connection member, to enclose the internal space of the housing 10. Both the two ends of the housing 10 and one end cover 70 may also be sealedly connected in a direct or indirect connection manner, for example, may be sealedly connected by welding or adhesion, or be fixedly and sealedly connected by a connection member.

It should be noted that, the side circumferences of the partition plates 20 refer to circumferential surfaces of the partition plates 20 toward the housing 10, and cooperation between the side circumferences of the partition plates 20 and the side walls of the housing 10 is not specifically limited, for example, a cooperation manner of interference fit or adhesion.

In another example, in another embodiment of this application, as shown in FIG. 5 and FIG. 6, the housing 10 includes multiple sub-housings 11 arranged in the first direction, two adjacent sub-housings 11 are connected to one partition plate 20, and a housing opening is formed at the end portion of the housing 10 in the first direction as a whole. Herein, it should be noted that, the housing opening is formed at one end of an outermost sub-housing 11 away from the partition plate, the housing opening formed at the one end cooperates with the end cover 70, and the end cover 70 is connected to the housing and encloses the housing opening. The accommodating cavity 60 at an end portion of the battery 100 in the first direction is an end portion accommodating cavity, the accommodating cavity 60 in a middle position of the battery 100 is a middle accommodating cavity, cavity walls of the end portion accommodating cavity include the end cover 70, the partition plate 20, and the sub-housing 11 arranged between the end cover 70 and the partition plate 20, and cavity walls of the middle accommodating cavity include two adjacent partition plates 20 and the sub-housing 11 arranged between the two adjacent partition plates 20. In this embodiment, part of the side circumference of the partition plate 20 is exposed to the housing 10, and part of the side circumference covers the housing 10.

In this application, if the housing 10 is made of a corrosive material, for example, an aluminum housing, when the electrode core assemblies 30 are connected in series, lithium ions are embedded inside the housing 10 due to different voltages between different electrode core assemblies 30, to form a lithium aluminum alloy, which corrodes the aluminum housing. In this application, a separator film 80 may be arranged between the housing 10 and the electrode core assemblies 30, and is used for separating contact between electrolyte solutions and the housing 10.

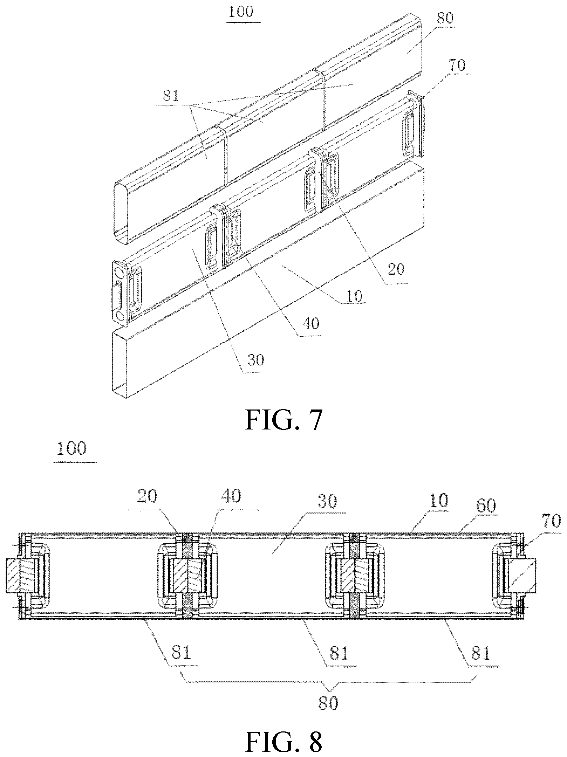

For example, in another embodiment of this application, as shown in FIG. 7 and FIG. 8, the housing 10 is an integral structure extending in the first direction; and a separator film 80 is arranged in the housing 10, the separator film 80 includes multiple sub-separator films 81 arranged in the first direction, two adjacent sub-separator films 81 are sealedly connected to one partition plate 20, and a separator film opening is formed on an end portion of the separator film 80 in the first direction as a whole. Herein. it should be noted that, the separator film opening is formed at one end of an outermost sub-separator film away from the partition plate, the separator film opening formed on the one end cooperates with the end cover 70, and the end cover 70 is connected to the separator film 80 and encloses the separator film opening. The accommodating cavity 60 at an end portion of the battery 100 in the first direction is an end portion accommodating cavity, the accommodating cavity 60 in a middle position of the battery 100 is a middle accommodating cavity, cavity walls of the end portion accommodating cavity include the end cover 70, the partition plate 20, and the sub-separator film 81 arranged between the end cover 70 and the partition plate 20, and cavity walls of the middle accommodating cavity include two adjacent partition plates 20 and the sub-separator film 81 arranged between the two adjacent partition plates 20. In this embodiment, the two ends of the housing 10 in the first direction and the corresponding end covers 70 may also be sealedly connected in a direct or indirect connection manner, for example, may be sealedly connected by welding or adhesion, or be fixedly and sealedly connected by a connection member.

The multiple sub-separator films 81 are multiple independent parts separated from each other, that is, the separator film 80 is a split-type separator film body. Each of the sub-separator films 81 is of a tubular structure with openings on two ends, and the electrode core assembly 30 is arranged inside the tubular sub-separator film 81. The partition plate 20 or the end cover 70 and an opening of the corresponding separator film 80 are sealedly connected, to form the accommodating cavity.

In this application, the sealed connection manner between the separator film 80 and the partition plate 20 or the end cover 70 and a specific structure thereof are not specifically limited. For example, when the partition plate 20 or the end cover 70 is made of a plastic material and the separator film 80 is made of plastic, sealed connection of hot melt may be used between the separator film 80 and the partition plate 20 or the end cover 70

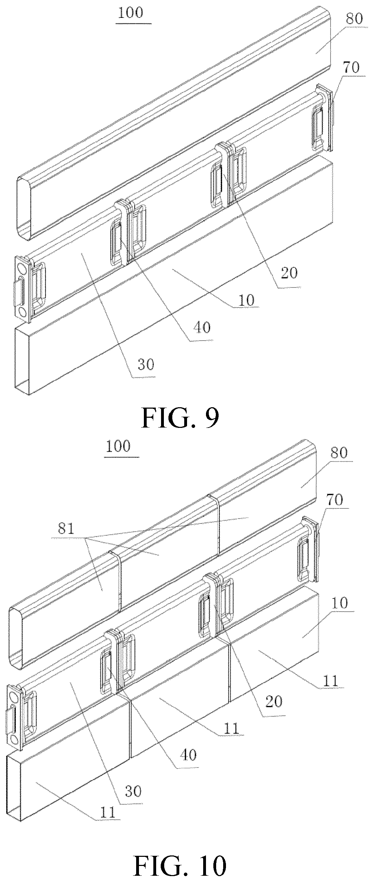

In another example, in another embodiment of this application, as shown in FIG. 9, the housing 10 is an integral structure extending in the first direction; a separator film 80 is arranged in the housing 10, the separator film 80 is also an integral structure extending in the first direction, and a separator film opening is formed at an end portion of the separator film 80 in the first direction; the side circumferences of the partition plates 20 cooperate with side walls of the separator film 80, to separate an interior of the separator film 80 into the multiple accommodating cavities 60; and the end covers 70 are connected to the separator film 80 and enclose the separator film opening. The accommodating cavity 60 at an end portion of the battery 100 in the first direction is an end portion accommodating cavity, the accommodating cavity 60 in a middle position of the battery 100 is a middle accommodating cavity, cavity walls of the end portion accommodating cavity include the end cover 70, the partition plate 20, and part of the separator film 80 arranged between the end cover 70 and the partition plate 20, and cavity walls of the middle accommodating cavity include two adjacent partition plates 20 and part of the separator film 80 arranged between the two adjacent partition plates 20. In this embodiment, the two ends of the housing 10 in the first direction and the corresponding end covers 70 may also be sealedly connected in a direct or indirect connection manner, for example, may be sealedly connected by welding or adhesion, or be fixedly and sealedly connected by a connection member.

Cooperation between the side circumferences of the partition plates 20 and the side walls of the separator film 80 is not specifically limited, for example, when the partition plates 20 and the separator film 80 are made of plastic, the separator film 80 may be sealedly connected to the partition plates 20 in a hot melt manner.

In another example, in another embodiment of this application, as shown in FIG. 10, a separator film 80 is arranged in the housing 10, the separator film 80 includes multiple sub-separator films 81 arranged in the first direction, two adjacent sub-separator films 81 are sealedly connected to one partition plate 20, the housing 10 includes multiple sub-housings 11 arranged in the first direction, and each of the multiple sub-separator films 81 is correspondingly received in one of the sub-housings 11; a separator film opening is formed at an end portion of the separator film 80 in the first direction as a whole; and the end covers 70 are connected to the separator film 80 and enclose the separator film opening. The accommodating cavity 60 at an end portion of the battery 100 in the first direction is an end portion accommodating cavity, the accommodating cavity 60 in a middle position of the battery 100 is a middle accommodating cavity, cavity walls of the end portion accommodating cavity include the end cover 70, the partition plate 20, and the sub-separator film 81 arranged between the end cover 70 and the partition plate 20, and cavity walls of the middle accommodating cavity include two adjacent partition plates 20 and the sub-separator film 81 arranged between the two adjacent partition plates 20. In this embodiment, the two ends of the housing 10 in the first direction as a whole and the corresponding end covers 70 may also be sealedly connected in a direct or indirect connection manner, for example, may be sealedly connected by welding or adhesion, or be fixedly and sealedly connected by a connection member.

The material of the separator film 80 is not specially limited, as long as the material has certain insulation and electrolyte solution corrosion resistance, and can provide insulation and does not react with an electrolyte solution. In some embodiments, the material of the separator film 80 may include polypropylene (PP), polyethylene (PE), or a multi-layer composite film. In some embodiments, the multi-layer composite film may include, for example, an inner layer, an outer layer, and an intermediate layer arranged between the inner layer and the outer layer. The inner layer may include a plastic material, for example, may be made of an insulative material less reactive to an electrolyte solution in the separator film 80. For example, the inner layer may include a PP or PE material. The intermediate layer may include a metal material, which can prevent vapor outside from entering the battery 100 and prevent the electrolyte solution inside from leaking out of the battery. Aluminum foil, stainless steel foil, copper foil, or the like are preferably selected as the metal material, and considering the molding performance, weight, and costs, the aluminum foil is preferable. For an aluminum foil material, priority is given to pure aluminum or aluminum-iron-based alloy materials. The outer layer is a protective layer, and may be made of a high melting point polyester or nylon material, to provide strong mechanical performance and prevent an external force from damaging the battery 100, so as to protect the battery 100. When an inner film is a multi-layer composite film, one implementation is that, the inner film is an aluminum-plastic composite film.

In some embodiments, the separator film 80 has certain flexibility, which facilitates a molding process of the battery 100 and prevents the battery from being punctured. A thickness of the separator film 80 is preferably 80 µm to 200 µm, and may be certainly adjusted according to actual situations.

The electrolyte solution is a core component forming the battery 100, and the electrolyte solution needs to be filled into the accommodating cavity 60 in the battery 100 of this application. Therefore, an electrolyte solution channel is further arranged in the battery 100 of this application, the electrolyte solution channel is in communication with the accommodating cavity 60, and the electrolyte solution may be filled in the accommodating cavity 60 through the electrolyte solution channel. The electrolyte solution channels may be arranged on components such as the partition plate 20, the housing 10, the end cover 70, and the separator film 80.

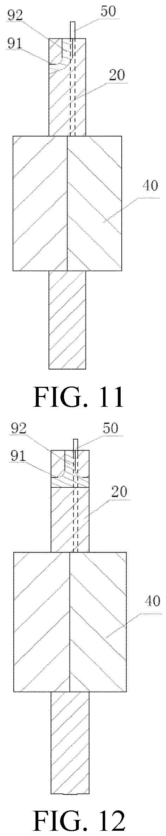

For example, in an embodiment, as shown in FIG. 11, the electrolyte solution channel includes an electrolyte solution filling channel 91, the electrolyte solution filling channel 91 is arranged on the partition plate 20 and is used for filling an electrolyte solution from the exterior of the battery 100 into the accommodating cavity 60, and the electrolyte solution filling channel 91 is in communication with the accommodating cavity 60 at least one side of the partition plate 20. The electrolyte solution filling channel 91 is in an enclosed state after electrolyte solution filling is completed, to separate communication between the accommodating cavity 60 and the exterior of the battery 100. A sealing portion 92 may be arranged in the electrolyte solution filling channel 91, and the sealing portion 92 seals the electrolyte solution filling channel 91.

In an implementation, as shown in FIG. 12, the electrolyte solution filling channel 91 may also be in communication with the accommodating cavities 60 at two sides of the partition plate 20 respectively.

In some embodiments, as shown in FIG. 11 and FIG. 12, the sampling wire 50 and the electrolyte solution filling channel 91 may be staggered (the sampling wire 50 is represented by a dash line in the figures).

A through hole may also be arranged at a position at which the housing 10 corresponds to the electrolyte solution filling channel 91 on the partition plate 20, and the through hole is used for communicating the electrolyte solution filling channel 91 and the exterior of the battery 100. When the structure of the battery 100 corresponds to that of the embodiments in FIG. 5 and FIG. 6, at least part of the side circumference of the partition plate 20 is exposed to the exterior of the battery 100, and the electrolyte solution filling channel 91 may also be in direct communication with the exterior of the battery 100 from the part of the exposed side circumference of the partition plate 20. After assembly of the housing 10 of the battery 100 is completed, the electrolyte solution may be filled through the through hole and the electrolyte solution filling channel 91.

In another example, in an embodiment, when the battery 100 further includes a separator film 80, the electrolyte solution filling channel 91 may also be arranged on the separator film 80. Referring to the above description, the electrolyte solution filling channel 91 is used for filling an electrolyte solution from the exterior of the battery 100 into the accommodating cavity 60, and the electrolyte solution filling channels 91 are in communication with the corresponding accommodating cavities 60. The electrolyte solution filling channel 91 is in an enclosed state after electrolyte solution filling is completed, to separate communication between the accommodating cavity 60 and the exterior of the battery 100. In this application, when the separator film 80 is made of plastic, hot melt is used for sealing, which can meet a sealing requirement for an electrolyte solution filling hole, and is more convenient to seal. For example, in some specific implementations, the separator film 80 includes a body of the separator film 80 and a protrusion protruding outward from the body of the separator film 80. In this case, an opening may be arranged on the protrusion, as the electrolyte solution filling channel 91. After electrolyte solution filling is completed, the protrusion with the opening may be sealed and tightened by hot melt.

That is, when the battery 100 further includes the separator film 80, the separator film 80 and the partition plate 20 form the accommodating cavity 60. Therefore, whether the electrolyte solution filling channel 91 is arranged on the partition plate 20 or the separator film 80, electrolyte solution may be filled into the battery 100, and then the housing 10 is mounted. In this way, the housing 10 has a secondary sealing effect on the electrolyte solution filling channel 91, and the sealing performance of the entire battery 100 is significantly improved. Once electrolyte solution leakage occurs in one of the accommodating cavities 60, the housing 10 provides a protection effect, to avoid a safety problem resulted from the electrolyte solution leakage. In addition, if a hole is arranged on the housing 10 for electrolyte solution filling, sealing and ensuring the strength of the housing 10 are both difficult problems. In this embodiment, without arranging the hole on the housing 10, the sealing of the electrolyte solution filling channel 91 is easier, and overall strength of the battery 100 is not considered too much.

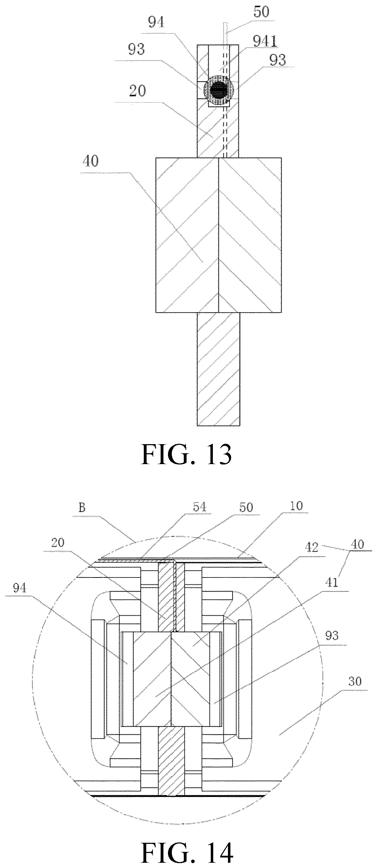

In another example, in an embodiment, as shown in FIG. 13, the electrolyte solution channel may also include an electrolyte solution guide hole 93, an electrolyte solution guide hole 93 used for allowing the electrolyte solution to pass through is arranged on at least one partition plate 20, and the electrolyte solution guide hole 93 is used for communicating two adjacent accommodating cavities 60 at two sides of the partition plate 20. The battery 100 further includes a blocking mechanism 94, the blocking mechanism 94 is arranged in the housing 10, the blocking mechanism 94 enables the electrolyte solution guide hole 93 to be in a set state, and the set state includes an open state and a closed state. It may be set that when the blocking mechanism 94 is in a first situation, the electrolyte solution guide hole 93 is in the open state, and when the blocking mechanism 94 is in a second situation, the electrolyte solution guide hole 93 is in the closed state. The blocking mechanism 94 may switch between the first situation and the second situation. For example, before or during the electrolyte solution filling of the battery 100, the blocking mechanism 94 is in the first situation, the electrolyte solution guide hole 93 is in the open state, and the electrolyte solution guide hole 93 is in communication with the two adjacent accommodating cavities 60 at the two sides of the partition plate 20. After the electrolyte solution filling of the battery, the blocking mechanism 94 switches from the first situation to the second situation, and the blocking mechanism 94 closes the electrolyte solution guide hole 93, so that the electrolyte solution guide hole 93 is in the closed state. In another example, during the formation of the battery 100 after the electrolyte solution filling, the blocking mechanism 94 is in the first situation, the electrolyte solution guide hole 93 is in the open state, and the electrolyte solution guide hole 93 is in communication with the two adjacent accommodating cavities 60 at the two sides of the partition plate 20. After the electrolyte solution filling and the formation, the blocking mechanism 94 switches from the first situation to the second situation, and the blocking mechanism 94 closes the electrolyte solution guide hole 93, so that the electrolyte solution guide hole 93 is in the closed state. In another example, when the battery 100 is overcharged or short-circuited, the blocking mechanism 94 switches from the second situation to the first situation, the blocking mechanism 94 enables the electrolyte solution guide hole 93 to be in the open state, and the electrolyte solution guide hole 93 is in communication with the two adjacent accommodating cavities 60 at the two sides of the partition plate 20.

As shown in FIG. 13, the blocking mechanism 94 may be received in a blocking mechanism placement space 941, and the blocking mechanism placement space 941 and the electrolyte solution guide hole 93 may be intersected. In some embodiments, as shown in FIG. 13, the blocking mechanism 94 is a metal ball with a rubber sleeve. In this solution, the metal ball ensures sealing strength, while the rubber sleeve improves sealing tightness.

In some embodiments, as shown in FIG. 13, the sampling wire 50 and the electrolyte solution guide hole 93 may be staggered (the sampling wire 50 is represented by a dash line in the figure).

The electrolyte solution channel further includes an electrolyte solution filling hole, and the electrolyte solution filling hole may be arranged on the end cover 70. In this way, electrolyte solution is only filled from electrolyte solution filling holes on the end covers 70 on the end portions of the battery 100, and the electrolyte solution is guided from the electrolyte solution guide holes 93 on the partition plates 20 into the accommodating cavities 60. By arranging the electrolyte solution filling holes, the electrolyte solution can be filled into the accommodating cavities 60 once, and there is no need to open for multiple times to perform electrolyte solution filling for multiple times. Certainly, the electrolyte solution filling holes may also be arranged on the housing 10, the partition plates 20, or the separator film 80, and the electrolyte solution filling principle thereof is similar to that of the electrolyte solution filling holes arranged on the end covers 70.

In this application, referring to FIG. 14 together, each of the electrode core assemblies 30 includes a first electrode lead-out member 32 and a second electrode lead-out member 33 used for leading out current, and the first electrode lead-out member 32 and the second electrode lead-out member 33 of at least one electrode core assembly 30 are respectively arranged at two opposite sides of the electrode core assembly 30 in the first direction. All electrode core assemblies 30 in the battery 100 are arranged in the first direction, and the first direction is a length direction of the battery 100. That is, the battery 100 adopts "head-to-head" arrangement of the electrode core assemblies 30, which can relatively facilitate series connection between every two of the electrode core assemblies 30 in the battery 100, and provide a simple connection structure. In addition, this arrangement can relatively facilitate manufacturing of batteries 100 with a longer length. If the electrode core assembly 30 only includes one electrode core, the first electrode lead-out member 32 and the second electrode lead-out member 33 may be respectively an anode tab and a cathode tab of the electrode core, or may be respectively a cathode tab and an anode tab. If the electrode core assembly includes multiple electrode cores, the first electrode lead-out member 32 and the second electrode lead-out member 33 may be electrode lead wires. It should be noted that, "first" and "second" in the first electrode lead-out member 32 and the second electrode lead-out member 33 are only used for distinguishing names, not to limit the number. For example, there may be one or more first electrode lead-out members 32.

In this application, as shown in FIG. 14, two adjacent electrode core assemblies 30 are connected in series by an electrode core connector 40. The electrode core connector 40 penetrates the partition plate 20 between the two adjacent electrode core assemblies 30. Ends of the electrode core connector 40 are electrically connected to the first electrode lead-out member 32 and the second electrode lead-out member 33 of the electrode core assemblies 30 at two sides of the partition plate 20 in the first direction. That is, in the electrode core assemblies 30, the first electrode lead-out member 32 of one electrode core assembly 30 is electrically connected to the second electrode lead-out member 33 of an adjacent electrode core assembly 30 by the electrode core connector 40. In an embodiment, the electrode lead-out members and the electrode core connector 40 in the partition plate 20 are directly welded. The two adjacent electrode core assemblies 30 are connected by the electrode core connector 40 penetrating the partition plate 20, which reduces a spacing between the two electrode core assemblies 30, and can give a greater design space for the battery 100. In addition, an aperture in the interior of the battery 100 can be saved, and an open area between the two adjacent electrode core assemblies 30 is increased, so that internal resistance of the battery 100 is reduced.

In some embodiments, referring to FIG. 14 together, the electrode core connector 40 includes a copper connection piece 41 and an aluminum connection piece 42, the copper connection piece 41 is electrically connected to the aluminum connection piece 42, and a position at which the copper connection piece is electrically connected to the aluminum connection piece is arranged inside the partition plate 20. In this embodiment, the copper connection piece 41 is connected to a copper lead-out end of the electrode core assembly 30 at one side of the partition plate 20, and the aluminum connection piece 42 is connected to an aluminum lead-out end of the electrode core assembly 30 at the other side of the partition plate 20.

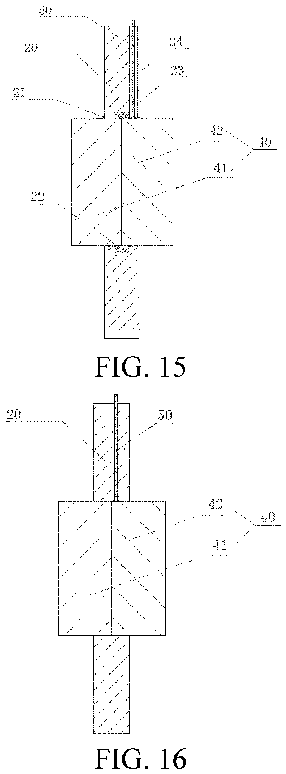

In an embodiment of this application, connection and a position relationship between the electrode core connector 40 and the partition plate 20 are shown in FIG. 15. Specifically, a connection through hole 21 is arranged on the partition plate 20, and the electrode core connector 40 penetrates through the connection through hole 21 from one side of the connection through hole 21 to the other side. That is, the electrode core connector 40 passes through the connection through hole 21. Referring to FIG. 4 together, one end of the electrode core connector 40 is connected to the electrode core assembly 30 at one side of the partition plate, and the other end of the electrode core connector 40 is connected to the electrode core assembly 30 at the other side of the partition plate 20. Copper and aluminum have a potential difference to lithium, and therefore corrosion is prone to occur at a contact position of the copper connection piece 41 and the aluminum connection piece 42 (namely, a contact position of the electrolyte solution). In addition, to separate the electrode core accommodating cavities 60 at the two sides of the partition plate 20, an encapsulated structure 22 is arranged in the connection through hole 21, and the encapsulated structure 22 encapsulates the electrode core connector 40 in the connection through hole 21. Meanwhile, the encapsulated structure 22 can enclose the connection through hole 21, to separate the adjacent electrode core accommodating cavities 60 at the two sides of the partition plate 20. In this application, the encapsulated structure 22 only needs to be capable of achieving sealing performance, electrolyte solution corrosion resistance, and insulation, for example, may be a rubber plug.

In another embodiment of this application, connection and a position relationship between the electrode core connector 40 and the partition plate 20 are shown in FIG. 16. The electrode core connector 40 and the partition plate 20 are integrally injection-molded. Specifically, the electrode core connector 40 is first manufactured, and then the partition plate 20 is integrally injection-molded outside the electrode core connector 40. More specifically, the copper connection piece 41 and the aluminum connection piece 42 are compositely connected, to form a composite connection piece; and then the partition plate 20 is integrally injection-molded and formed outside the composite connection piece. In this way, a contact position (the composite connection piece) of the copper connection piece 41 and the aluminum connection piece 42 is sealed inside the partition plate 20, which prevents the position from being exposed to an internal space of the battery 100, particularly preventing the position from being in contact with the electrolyte solution, thereby preventing the connected position of copper and aluminum from being corroded. During assembly of the battery in this embodiment, the partition plate 20 and the electrode core connector 40 are integrally formed. Therefore, there is no need to assemble the partition plate 20 and the electrode core connector 40, and the electrode core assemblies 30 only need to be directly connected to the electrode core connector 40 on the partition plate 20, thereby simplifying the process. In addition, a connection through hole 21 is not formed on the partition plate 20, and there is no need to arrange an encapsulated structure 22 to seal the connection through hole 21, thereby reducing the risk.

Safety and stability are important for the power battery 100. For a conventional battery module and a battery pack, independent lithium-ion batteries connected in series/parallel are used to form the battery module or the battery pack, so that each lithium-ion battery may be sampled outside the each lithium-ion battery. However, if multiple electrode core assemblies 30 are connected in series and electrode lead-out members thereof are received in the housing 10 of the battery 100, it is not convenient to sample outside the battery 100 in the conventional manner. In this application, the sampling wires 50 may be arranged to be electrically connected to the electrode core connectors 40 and are leaded out from the partition plates 20 through the wire harness channel 54, thereby sampling each electrode core assembly 30 in the housing 10, to monitor a state of each electrode core assembly 30 to ensure safety and stability of the battery 100. The sampling wires 50 arranged in this application can resolve a sampling problem of the electrode core assemblies 30 connected in series inside the battery 100.

In some embodiments, as shown in FIG. 4, FIG. 15, and FIG. 16, the sampling wire 50 is welded to the aluminum connection piece 42, to be electrically connected to the electrode core assembly 30.

In some embodiments, as shown in FIG. 15, a leading wire aperture 23 is formed in the partition plate 20, and the sampling wire 50 penetrates through the leading wire aperture 23 and is leaded out from the partition plate 20. A sealing material 24 for filling a gap may be arranged between the leading wire aperture 23 and the sampling wire 50.

In some other embodiments, as shown in FIG. 16, the partition plate 20 may be integrally injection-molded with the sampling wire 50 and the electrode core connector 40. In this case, the sampling wire 50 is tightly engaged with the partition plate 20, that is, there is no need to pre-arrange the leading wire aperture 23 and arrange the sealing material 24.

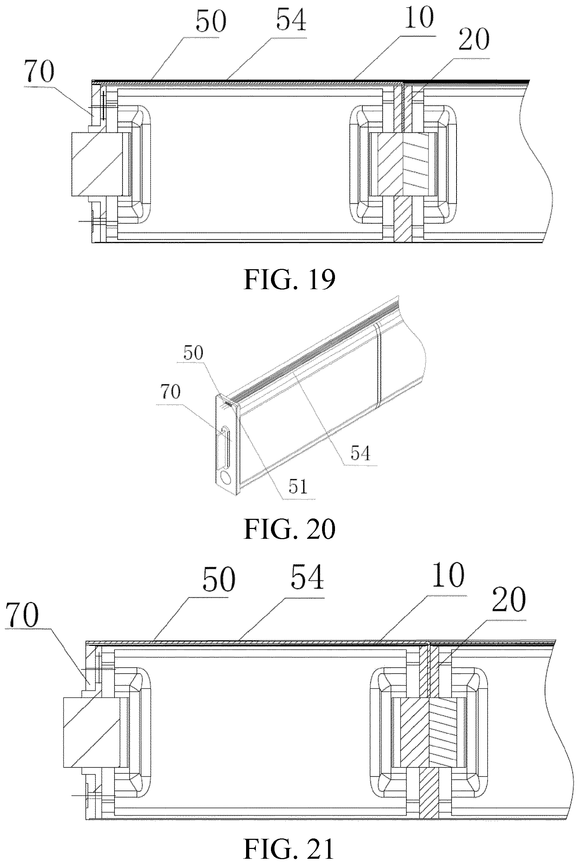

In some embodiments, a sampling hole is arranged on the battery 100, the sampling wire 50 is leaded out from the wire harness channel 54 to the sampling hole, and the sampling hole is used for leading out a sampling signal. The sampling hole 51 may be arranged on the housing 10, as shown in FIG. 14. The sampling hole 51 may also be arranged on the end cover 70 (referring to FIG. 20). When the sampling hole 51 is arranged on the housing 10, the multiple sampling wires 50 corresponding to the multiple partition plates 20 may converge at the sampling hole 51 of the housing 10 through the wire harness channel 54, and the multiple sampling wires 50 corresponding to the multiple partition plates 20 may also respectively converge at corresponding positions of the housing 10 through the wire harness channel 54. That is, the sampling hole 51 may be arranged on a position of the housing 10 corresponding to each of the partition plates 20. One sampling hole 51 or less sampling holes may also be arranged on the battery 100, so that the multiple sampling wires 50 converge to a same sampling hole through the wire harness channel 54. To separate the interior from the exterior of the battery 100, as shown in FIG. 14, a flexible filling piece may be formed between the sampling wire 50 and the sampling hole 51, and the flexible filling piece may further be used for fixing the sampling wire 50.

The wire harness channel may be a groove recessed in an internal surface of the housing 10, may be a pipe arranged on the internal surface or an external surface of the housing 10, or may be a pipe arranged at another position in the battery 100. All sampling wires are fixed through the wire harness channel in order in this application, thereby improving sampling accuracy of the entire battery and safety of sampling wire harnesses.

For example, in an embodiment, with reference to FIG. 19 and FIG. 20, the wire harness channel 54 is a wire groove arranged on an inner side of the housing 10, and the sampling wires 50 are all received in the wire groove after being leaded out from the partition plates 20. In this embodiment, the wire groove extends in the first direction. The sampling wires 50 leaded out from the wire groove are leaded out through the sampling hole 51 on the end cover 70.

In other embodiments, the sampling wires 50 are connected to a circuit board, a connector, and the like after being leaded out from the wire harness channel 54.

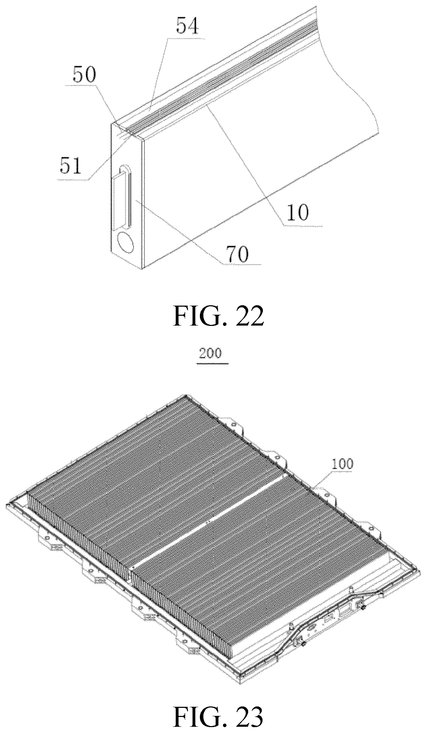

In another example, in an embodiment, as shown in FIG. 22, the wire harness channel 54 is a pipe arranged on the external surface of the housing 10, and the sampling wires 50 are all received in the pipe after being leaded out from the partition plates 20. In this embodiment, the pipe extends in the first direction. The sampling wires 50 leaded out from the wire groove are leaded out through a sampling hole 51 on the pipe. In addition, the sampling wires 50 after being leaded out from the partition plates 20 may be received in the pipe after penetrating the housing 10, and the pipe may be fixed to the housing 10, and exactly seals holes formed on the housing 10 by the sampling wires 50 penetrating the housing 10, thereby preventing the housing 10 from being in communication with the external holes formed on the housing 10 by the sampling wires 50 penetrating the housing 10.

In an embodiment, the wire harness channel 54 may include multiple sub wire grooves arranged at intervals, and the multiple sampling wires 50 after being leaded out from the partition plates 20 are respectively received in and fixed to the corresponding sub wire grooves, so that the multiple sampling wires 50 are arranged at intervals. In this way, short circuit by contact between adjacent sampling wires 50 can be prevented, and wear between the sampling wires 50 can be prevented.

In other embodiments, a connector may be further arranged on the battery 100, the sampling wires 50 converge to the connector after being leaded out from the partition plates 20, and the connector may match a connector for external sampling, to lead out a sampling signal. The connector may be arranged on the housing 10, or may be arranged on the end cover 70. The connector may be a multi-probe type connector, a USB type connector, or another connector as required. For example, the connector includes a ceramic sleeve and multiple contact pins received in the ceramic sleeve, and each of the contact pins is electrically connected to one of the sampling wires correspondingly.

In an embodiment, the multiple sampling wires 50 may further converge to a circuit board after being leaded out from the partition plates 20, a detection chip may be integrated on the circuit board, and the circuit board is used for generating a sampling signal according to information acquired by the sampling wires 50. The circuit board may be arranged on the side circumference of the housing 10 or the side circumference of the partition plate 20, or the circuit board may be arranged on the end cover 70. The circuit board may be further electrically connected to the connector, and the connector may be used for outputting the sampling signal generated by the circuit board. The detection chip may be integrated with components such as an odor sensor and a temperature sensor. Certainly, the components such as the odor sensor and the temperature sensor may also be directly attached to the circuit board and be electrically connected to the detection chip, to transmit detection data to the detection chip for processing.

The sampling wires 50 may also be connected to the circuit board and the connector after being leaded out from the wire harness channel 54.

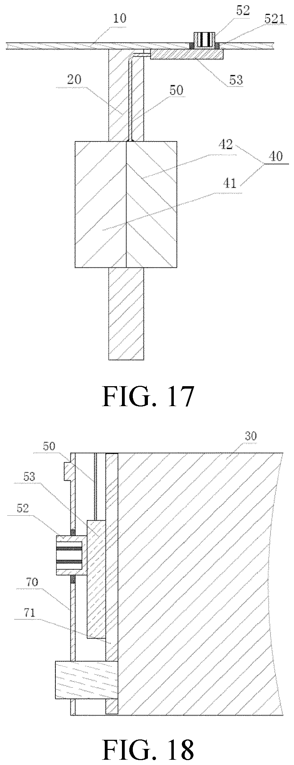

For example, in an embodiment, as shown in FIG. 17, the connector 52 penetrates through the housing 10, the circuit board 53 corresponds to the connector 52 and is fixed to the housing 10, the circuit board 53 is electrically connected to the connector 52, the sampling wire 50 is electrically connected to the circuit board 53 after being leaded out form the partition plate 20, and the circuit board 53 may process information acquired by the sampling wire 50 to form a sampling signal and output the sampling signal to the connector 52, thereby obtaining the sampling signal from the connector 52 on the housing 10. In this embodiment, a sealing ring 521 is further formed between the connector 52 and the housing 10, and the sealing ring 521 is used for separating an internal space from an external space of the battery 100, and is further used for fixing the connector 52.

In another example, in an embodiment, as shown in FIG. 18, the connector 52 penetrates through the end cover 70, the circuit board 53 corresponds to the connector 52 and is arranged on the end cover 70, the circuit board 53 is electrically connected to the connector 52, the sampling wire 50 is electrically connected to the circuit board 53 after being leaded out form the partition plate 20, and the circuit board 53 may process information acquired by the sampling wire 50 to form a sampling signal and output the sampling signal to the connector 52, thereby obtaining the sampling signal from the connector 52 on the housing 10. In this embodiment, a sealing ring 521 is further formed between the connector 52 and the housing 10, and the sealing ring is used for separating an internal space from an external space of the battery 100, and is further used for fixing the connector 52. In this embodiment, an insulating member 71 is further arranged at a position adjacent to the end cover 70 in the battery 100, the circuit board 53 is fixed to the insulating member 71, the insulating member 71 separates electrolyte solutions in the electrode core assembly 30 and the battery 100 from the circuit board 53 in an insulated manner, and the insulating member 71 may further prevent the circuit board 53 from shaking. The insulating member 71 may be fixed to the housing 10 or the end cover 70. The insulating member 71 may be made of a plastic material.

In some embodiments, the sampling wire 50 after being leaded out from the partition plate 20 may be a wire coated with an insulating layer, and may also prevent short circuit by contact between adjacent sampling wires 50. The sampling wire 50 may be a bare metal wire when being in the partition plate 20. The sampling wire 50 after being leaded out from the partition plate 20 may be electrically connected to the bare-metal-wire-type sampling wire 50 in the partition plate 20.

In an implementation of the present disclosure, the battery 100 further includes a detection unit, and the detection unit is directly sealed inside the housing 10 of the battery 100, which can facilitate detection of the state of the electrode core assembly 30 in the housing 10 of the battery 100 at any time, and ensure accuracy and timeliness of sampling information.

In the present disclosure, the battery 100 may be in various shapes, which may be a regular geometric shape or an irregular geometric shape, for example, may be a square, a circle, a polygon, a triangle, or may be in any shape for example, be a specially shaped battery 100. It may be understood that a shape of the battery 100 is not limited in the present disclosure. In an implementation, the battery 100 is a rough cuboid, and the battery 100 has a length L, a width H, and a thickness D. The length L of the battery 100 is greater than the width H, and the width H of the battery 100 is greater than the thickness D. The length of the battery 100 is 400 mm to 2500 mm.

It should be noted that, the battery 100 being a rough cuboid may be understood as that the battery 100 may be a cuboid, a cube, or a rough cuboid or cube having a special shape locally; or may present an approximate cuboid or cube as a whole, but partially have a gap, a bulge, a chamfer, an arc, and a curve.

The thickness of the battery 100 of the present disclosure can be expanded in a wide range, and the battery 100 greater than 10 mm or more can be freely compatible, which is different from a conventional pouch battery 100 (less than 15 mm). An internal cavity is achieved in the conventional pouch battery 100 by stretching and molding of an aluminum-plastic composite film, and therefore the thickness of the interior of the battery 100 is limited by tensile performance of the aluminum-plastic composite film, and production of a great-thickness battery 100 cannot be implemented. The battery 100 in the technology can implement production of an over-10 mm-thickness battery 100.

In the present disclosure, the length L and the width H of the battery 100 meet: L/H=4 to 21.

In the present disclosure, the housing 10 is used for improving strength of the battery 100 and ensuring safe use of the battery 100, and the housing may be a plastic housing 10 or a metal housing 10. When the housing is a metal housing 10, heat dissipation performance is better, and the housing 10 has higher strength and can play a supporting role by itself.

In the present disclosure, the battery 100 may be a lithium-ion battery 100.

In the present disclosure, other structures, for example, an explosion-proof valve and a current interruption device, of the battery 100 are the same as conventional arrangements in the related art, which are not repeated herein.

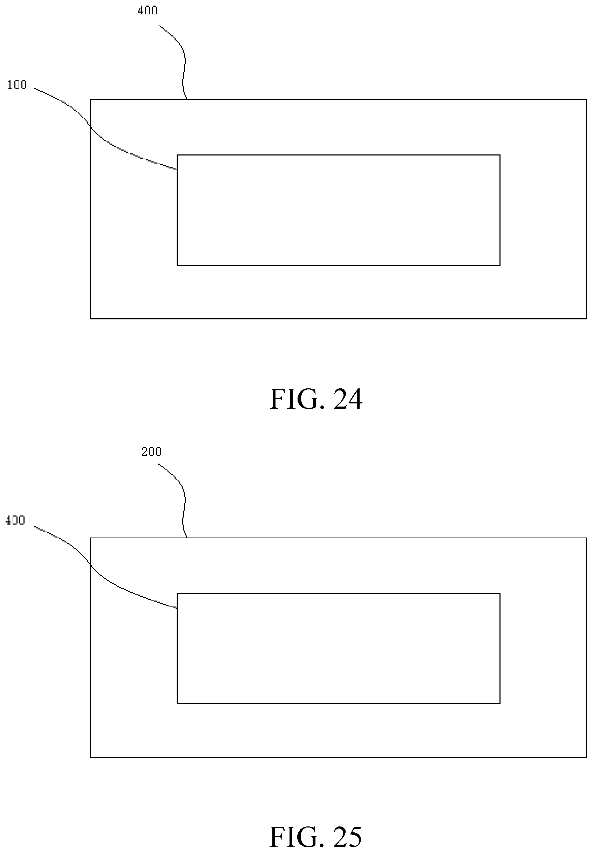

As shown in FIG. 24, in another aspect of the present disclosure, a battery module 400 is provided, including the battery 100 in any one of the foregoing embodiments. By using the battery module 400 provided in the present disclosure, an assembly process is less, and costs are lower.

As shown in FIG. 23 and FIG. 25, the present disclosure provides a battery pack 200, including the battery 100 in any one of the foregoing embodiments or the foregoing battery module 400. By using the battery pack 200 provided in the present disclosure, an assembly process is less, costs of the battery 100 are lower, and energy density of the battery pack 200 is higher.

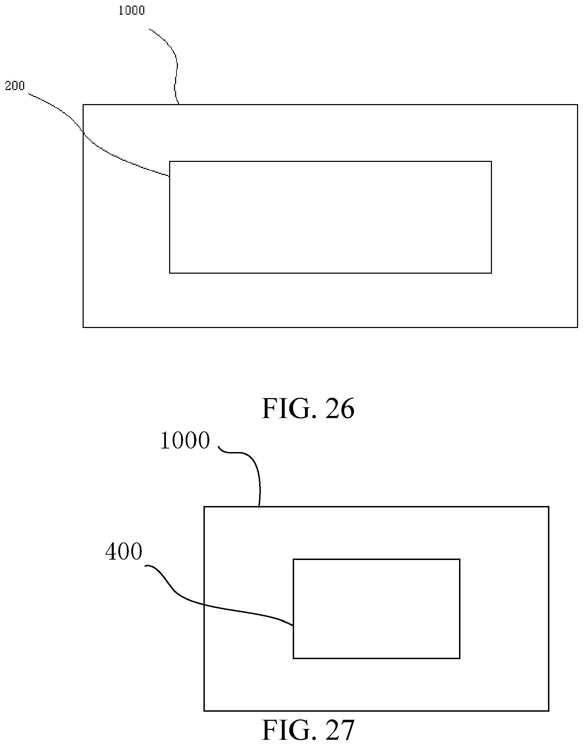

An electric vehicle 1000 shown in FIG. 26 and FIG. 27 includes the foregoing battery pack 200 or the battery module 400. By using the electric vehicle 1000 provided in the present disclosure, an endurance capability of the vehicle is higher, and costs are lower.

In the descriptions of the present disclosure, it should be noted that, unless otherwise explicitly specified or defined, the terms such as "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present disclosure according to specific situations.

In description of this specification, description of reference terms such as "an embodiment", "specific embodiments", or "an example", means including specific features, structures, materials, or features described in the embodiment or example in at least one embodiment or example of the present disclosure. In this specification, schematic descriptions of the foregoing terms do not necessarily point at a same embodiment or example. In addition, the described specific features, structures, materials, or characteristics may be combined in a proper manner in any one or more of the embodiments or examples.

Finally, it should be noted that the foregoing specific implementations are merely intended for describing the technical solutions of the present disclosure but not for limiting the present disclosure. Although the present disclosure is described in detail with reference to the exemplary implementations, a person of ordinary skill in the art should understand that they may still make modifications or equivalent replacements to the technical solutions described in the present disclosure without departing from the spirit and scope of the technical solutions of the embodiments of the present disclosure.

## Claims

1. A battery, comprising:
a housing;
a plurality of accommodating cavities arranged in the housing;
a partition plate for separating two adjacent accommodating cavities;
an electrode core assembly, received in one of the accommodating cavities, a plurality of electrode core assemblies being sequentially arranged in a first direction and connected in series; and
a plurality of sampling wires, electrically connected to the plurality of electrode core assemblies correspondingly.

2. The battery according to claim 1, wherein the battery further comprises end covers, the housing is an integral structure extending in the first direction, and the end covers are arranged at two ends of the housing in the first direction, to enclose an internal space of the housing; and a plurality of partition plates are arranged in the housing at intervals, and side circumferences of the partition plates cooperate with side walls of the housing, to separate an interior of the housing into the plurality of accommodating cavities; wherein the accommodating cavity at an end portion of the battery in the first direction is an end portion accommodating cavity, the accommodating cavity in a middle position of the battery is a middle accommodating cavity, cavity walls of the end portion accommodating cavity comprise the end cover, the partition plate, and part of the housing arranged between the end cover and the partition plate, and cavity walls of the middle accommodating cavity comprise two adjacent partition plates and part of the housing arranged between the two adjacent partition plates.

3. The battery according to claim 1 or 2, wherein the housing is an integral structure extending in the first direction; a separator film is arranged in the housing, the separator film is an integral structure extending in the first direction, and a separator film opening is formed at an end portion of the separator film in the first direction; the side circumferences of the partition plates cooperate with side walls of the separator film, to separate an interior of the separator film into the plurality of accommodating cavities; and the battery further comprises end covers, and the end covers are connected to the separator film and enclose the separator film opening; wherein the accommodating cavity at an end portion of the battery in the first direction is an end portion accommodating cavity; the accommodating cavity in a middle position of the battery is a middle accommodating cavity, cavity walls of the end portion accommodating cavity comprise the end cover, the partition plate, and part of the separator film arranged between the end cover and the partition plate, and cavity walls of the middle accommodating cavity comprise two adjacent partition plates and part of the separator film arranged between the two adjacent partition plates.

4. The battery according to any one of claims 1 to 3, wherein the housing is an integral structure extending in the first direction; the separator film is arranged in the housing, the separator film opening is formed at the end portion of the separator film in the first direction, the separator film comprises a plurality of sub-separator films arranged in the first direction, and two adjacent sub-separator films are sealedly connected to a same partition plate; and the battery further comprises end covers, and the end covers are connected to the separator film and enclose the separator film opening, wherein the accommodating cavity at an end portion of the battery in the first direction is an end portion accommodating cavity, the accommodating cavity in a middle position of the battery is a middle accommodating cavity, cavity walls of the end portion accommodating cavity comprise the end cover, the partition plate, and the sub-separator film arranged between the end cover and the partition plate, and cavity walls of the middle accommodating cavity comprise the two adjacent partition plates and the sub-separator film arranged between the two adjacent partition plates.

5. The battery according to any one of claims 1 to 4, wherein a housing opening is formed at an end portion of the housing in the first direction, the housing comprises a plurality of sub-housings arranged in the first direction, and two adjacent sub-housings are connected to a same partition plate; and the battery further comprises end covers, and the end covers are connected to the housing and enclose the housing opening; wherein the accommodating cavity at an end portion of the battery in the first direction is an end portion accommodating cavity, the accommodating cavity in a middle position of the battery is a middle accommodating cavity, cavity walls of the end portion accommodating cavity comprise the end cover, the partition plate, and the sub-housing arranged between the end cover and the partition plate, and cavity walls of the middle accommodating cavity comprise two adjacent partition plates and the sub-housing arranged between the two adjacent partition plates.

6. The battery according to any one of claims 1 to 5, wherein the battery further comprises a wire harness channel, and the plurality of sampling wires are received in the wire harness channel.

7. The battery according to any one of claims 2 to 6, wherein the plurality of sampling wires converge at a same end cover.

8. The battery according to any one of claims 1 to 7, wherein the wire harness channel is a groove arranged on an internal surface of the housing, or the wire harness channel is a groove arranged on an external surface of the housing.

9. The battery according to any one of claims 1 to 7, wherein the wire harness channel is a hollow insulating pipe formed inside or outside the housing.

10. The battery according to any one of claims 2 to 9, wherein the battery further comprises a connector, and the connector is electrically connected to the plurality of sampling wires, to converge the plurality of sampling wires.

11. The battery according to any one of claims 2 to 9, wherein the connector is fixed to the end cover or a side circumference of the housing.

12. The battery according to any one of claims 2 to 9, wherein the battery further comprises a connector, the battery further comprises a circuit board arranged in the housing, the plurality of sampling wires converge on the circuit board, the circuit board is used for generating a sampling signal according to information acquired by the sampling wires, the connector is arranged on the end cover and is electrically connected to the circuit board, and the connector is used for outputting the sampling signal.

13. The battery according to claim 12, wherein the connector is fixed to the end cover, an insulating member is further arranged in a position adjacent to the end cover in the battery, the circuit board is fixed to the insulating member, and the insulating member separates the electrode core assemblies from the circuit board in an insulated manner.

14. The battery according to claim 10, wherein sampling holes are formed on the end cover or the housing, the connector is fixed to the end cover or an outer side of the housing, and the plurality of sampling wires pass through the sampling holes and converge at the connector.

15. The battery according to claim 10, wherein the connector penetrates through the end cover or the housing, and a sealing ring is formed between the end cover or the housing and the connector.

16. The battery according to claim 10, wherein the connector comprises a ceramic sleeve and a plurality of contact pins received in the ceramic sleeve, and each of the contact pins is electrically connected to one of the sampling wires correspondingly.

17. The battery according to any one of claims 1 to 16, wherein the sampling wire is leaded out from the partition plate; and part of the sampling wire that is arranged inside the partition plate is electrically connected to part of the sampling wire that is arranged outside the partition plate by welding or an insertion member.

18. The battery according to any one of claims 1 to 17, wherein the sampling wire is leaded out from the partition plate; and the part of the sampling wire that is arranged inside the partition plate is a bare metal wire; and the part of the sampling wire that is arranged outside the partition plate is a conductive wire coated with an insulating layer.

19. The battery according to any one of claims 1 to 18, wherein the sampling wire is further leaded out from the side circumference of the housing after being leaded out from the partition plate, or the sampling wire is further leaded out from a same end cover after being leaded out from the partition plate.

20. The battery according to any one of claims 1 to 19, wherein the battery comprises a plurality of electrode core connectors, and adjacent electrode core assemblies are connected in series through the electrode core connectors.

21. The battery according to claim 20, wherein through connection member receiving holes are formed on the partition plates, and the electrode core connectors penetrate through the connection member receiving holes; and a sealing ring is formed between the electrode core connector and the connection member receiving hole, and the sealing ring is used for preventing accommodating cavities at two sides of the partition plate from being in communication through the connection member receiving hole.

22. The battery according to claim 20 or 21, wherein the partition plate is an injection-molded member, and the electrode core connector and the sampling wire are integrally injection-molded with the partition plate.

23. The battery according to any one of claims 20 to 22, wherein the electrode core connector comprises a copper connection piece and an aluminum connection piece, a position at which the copper connection piece is connected to the aluminum connection piece is arranged in the partition plate, and the sampling wire is electrically connected to the aluminum connection piece.

24. The battery according to any one of claims 1 to 23, wherein each of the electrode core assemblies comprises a first electrode lead-out member and a second electrode lead-out member used for leading out current, and the first electrode lead-out member and the second electrode lead-out member of at least one electrode core assembly are respectively arranged at two opposite sides of the electrode core assembly in the first direction; and both the first electrode lead-out member and the second electrode lead-out member are electrically connected to the electrode core connector.

25. The battery according to any one of claims 1 to 24, wherein the battery is a rough cuboid, the battery has a length L, a width H, and a thickness D, the length is greater than the width, the width is greater than the thickness, and the length of the battery is 400 mm to 2500 mm.

26. The battery according to any one of claims 1 to 25, wherein the battery further comprises a detection unit, and the detection unit is electrically connected to the sampling wire, and is used for detecting a state of the electrode core assembly.

27. A battery module, comprising the battery according to any one of claims 1 to 26.

28. A battery pack, comprising the battery according to any one of claims 1 to 26 or comprising the battery module according to claim 22.

29. An electric vehicle, comprising the battery module according to claim 27 or comprising the battery pack according to claim 28.
